# EUROPEAN PATENT APPLICATION

(11) **EP 2 226 968 A1**
(43) Date of publication of application: **08.09.2010**
(21) Application number: 09734000.4
(22) Date of filing: 08.04.2009
(51) Int. Cl.: H04L 12/18

(54) **A METHOD, EQUIPMENT AND SYSTEM FOR IMPLEMENTING FILE SHARING IN AN AUDIO/VIDEO CONFERENCE**

(30) Priority: 24.04.2008 CN 200810094645
(71) Applicant: Huawei Technologies Co., Ltd., Longgang District, Shenzhen Guangdong 518129 (CN)
(72) Inventor: CHA, Feng, Longgang District 518129 Shenzhen (CN)
(74) Representative: Kreuz, Georg Maria
(86) International application number: PCT/CN2009/071188
(87) International publication number: WO 2009/129718

(57) **Abstract**

A method for implementing file sharing in an audio and video conference includes: receiving a message sent by a file sharing initiator in the audio and video conference for requesting to create a file sharing data conference; creating the data conference for the initiator, and adding the initiator into the data conference; and carrying Session Description Protocol (SDP) information of a monitoring port distributed to the data conference in a response message, and sending the message to the initiator. A device and system for implementing file sharing in an audio and video conference are also provided.

## Description

The application claims the benefit of priority to China Patent Application No. 200810094645.0, filed on April 24, 2008 and entitled "method, device, and system for implementing file sharing in audio and video conference", which is incorporated herein by reference in its entirety.

### FIELD OF THE TECHNOLOGY

The present invention relates to the field of communication technology, and more particularly to a method, device, and system for implementing file sharing in an audio and video conference.

### BACKGROUND OF THE INVENTION

A common method for implementing file sharing in an audio and video conference is to integrate an audio and video conference based on the H.323 protocol with a data conference based on the T.120 protocol specified by the International Telecommunication Union (ITU), so as to realize data file sharing in an audio/video multimedia conference. This method generally has two modes: inband communication and outband communication.

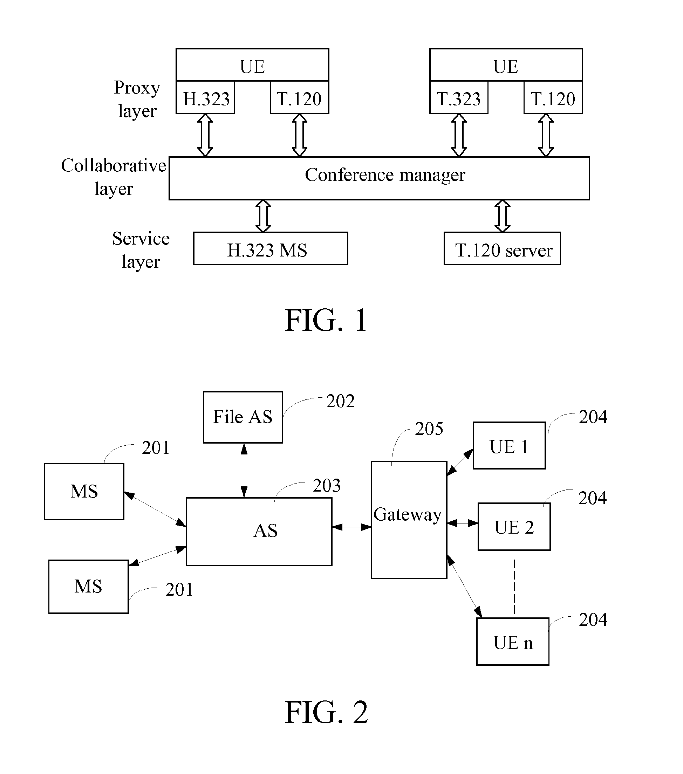

FIG. 1 is a schematic view of a structure of a system adopting inband communication, in which audio/video and data are required to share one bandwidth. When user equipment (UE) joins in a conference, the bandwidth is specified by an H.323 media server (MS). In the conference, the bandwidth of the audio/video is controlled by the MS, and the bandwidth of the data conference is controlled by a T.120 server. When the MS invites a UE, audio, video, and data channels are respectively opened, the audio/video channels are assigned to a multiprocessor of the MS, and the data channel is assigned to the T.120 server.

It has become apparent that the conventional technology has the following problems.

When a UE initiates an audio and video conference, H.323 protocol signaling is used and processed by the H.323 MS, and when the UE initiates a data conference, T.120 protocol signaling is used and processed by the T.120 server. Therefore, the two servers need to organize different conferences, that is, the audio and video conference and the data conference, and also need to develop a complex logic to associate the two conferences. However, as the H.323 MS and the T.120 server are adapted to deal with different protocol signaling, the two servers have a convergence problem. Moreover, since the audio/video and data share the same bandwidth in the conventional technology and information is transmitted through the same port, once the H.323 is offline, the data server is also interrupted. In addition, if the data server has no bandwidth control, a sudden burst of data may lead to loss of the audio/video.

### SUMMARY OF THE INVENTION

Accordingly, the present invention provides a method and device for implementing file sharing in an audio and video conference, so as to realize file sharing between members of the conference based on the audio and video conference.

According to the first aspect of the present invention, a method for implementing file sharing in an audio and video conference is provided, which includes the following steps.

A message sent by a file sharing initiator in the audio and video conference for requesting to create a file sharing data conference is received.

The data conference is created for the initiator, and the initiator is added into the data conference.

Session Description Protocol (SDP) information of a monitoring port distributed to the data conference is carried in a response message, and the message is sent to the initiator.

According to the second aspect of the present invention, an application server (AS) is provided, which includes a receiving unit and a data conference unit.

The receiving unit is adapted to receive a message sent by a file sharing initiator in an audio and video conference for requesting to create a file sharing data conference. The message carries SDP information about an Internet Protocol (IP) address and a port number for the initiator to upload a data file.

The data conference unit is adapted to generate a data conference number and a port occupied by file sharing for the initiator when the receiving unit receives the message for requesting to create the file sharing data conference, add the initiator into the data conference, package a monitoring port distributed to the data conference in the SDP information, carry the SDP information in a response message, and send the message to the initiator.

According to a third aspect of the present invention, a file AS is provided, which includes a data conference creating unit, a data conference adding unit, and a sending unit.

The data conference creating unit is adapted to receive a data conference number and a port occupied by file sharing generated by an AS when creating a data conference for an initiator, and create a data conference of the data conference number.

The data conference adding unit is adapted to add the initiator into the data conference created by the data conference creating unit, and distribute a monitoring port to the data conference.

The sending unit is adapted to package the monitoring port distributed by the data conference adding unit to the data conference in the SDP information, carry the SDP information in a response message, and send the message to the initiator.

According to a fourth aspect of the present invention, a system for implementing file sharing in an audio and video conference is provided, which includes an AS and a file AS.

The AS is adapted to receive a message sent by a file sharing initiator in the audio and video conference for requesting to create a file sharing data conference, and generate a data conference number and a port occupied by file sharing.

The file AS is adapted to create a data conference of the data conference number according to the data conference number generated by the AS, add the initiator into the data conference, package a monitoring port distributed to the data conference in SDP information, carry the SDP information in a response message, and send the message to the initiator.

Compared with the conventional technology, the present invention has the following advantages.

In the present invention, graphics, data, vote, and other applications can be transmitted in the audio and video conference by the members of the conference through file sharing, so as to enable users to acquire more types of text and graphics information in a multimedia audio and video conference, which facilitates the development of various types of services and enriches users' demands for communication.

Meanwhile, in the present invention, extended Session Initiation Protocol (SIP) audio and video conference signaling is adopted for implementing file sharing, so that file sharing and audio and video conference may be both integrated on one network entity, and the same type of signaling is employed to facilitate the convergence of the two as well as the expansion of other services.

Moreover, in the present invention, since a monitoring port is particularly distributed for file sharing, the file sharing and audio and video conference are respectively implemented through different ports, so that data for different purposes may not interfere with each other, and the problem of simultaneous disconnection is avoided, thereby enhancing the reliability of data transmission.

### BRIEF DESCRIPTION OF THE DRAWINGS

FIG. 1 is a schematic view of a structure of a system adopting inband communication in the conventional technology;
FIG. 2 is a schematic view of a structure of a system for implementing file sharing in an audio and video conference according to an embodiment of the present invention;
FIG. 3 is a flow chart of a method for creating an audio and video conference according to an embodiment of the present invention;
FIG. 4 is a flow chart of a method for implementing file sharing based on an audio and video conference according to an embodiment of the present invention;
FIG. 5 is a schematic view illustrating logic relations between an audio and video conference and data conferences according to an embodiment of the present invention;
FIG. 6 is a flow chart of a data file uploading method according to an embodiment of the present invention;
FIG. 7 is a flow chart of a data file downloading method according to an embodiment of the present invention;
FIG. 8 is a flow chart of another method for implementing file sharing based on an audio and video conference according to an embodiment of the present invention;
FIG. 9 is a schematic view of a structure of a device according to an embodiment of the present invention;
FIG. 10 is a schematic view of a structure of another device according to an embodiment of the present invention; and
FIG. 11 is a schematic view of a structure of a system according to an embodiment of the present invention.

### DETAILED DESCRIPTION OF THE EMBODIMENTS

Embodiments of the present invention are illustrated in detail below with reference to the accompanying drawings.

In the embodiments of the present invention, a file sharing data conference is created based on an SIP audio and video conference, and session establishment and conference control of the file sharing data conference are implemented through extended SIP signaling.

In an embodiment, the present invention provides a method for implementing file sharing in an audio and video conference, which includes: when a network entity in a system organizing the audio and video conference receives a message sent by a file sharing initiator in the audio and video conference for requesting to create a file sharing data conference, creating the data conference for the initiator, and adding the initiator into the data conference; and meanwhile, distributing a monitoring port for receiving a file uploaded by the initiator to the data conference, packaging, by the network entity, the distributed monitoring port in an SDP format in a response message, and sending the message to the initiator, so as to enable the initiator to upload the data file according to the SDP information about the monitoring port. The message for requesting to create the file sharing data conference may be a Re-Invite message, or an SIP session control message, such as SIP INFO.

The above functions of the network entity may be integrally implemented by one network entity, or respectively implemented by different network entities in the audio and video conference system. For example, the embodiment of the present invention may also be applied in a system shown in FIG. 2. FIG. 2 is a schematic view of a structure of a system for implementing file sharing in an audio and video conference according to an embodiment of the present invention. The system includes: MSs 201, a file AS 202, an AS 203, UE 204s, and a gateway 205. The SIP AS 203 is adapted to control the UE 204s, the MSs 201, and the file AS 202, execute conference logic and construct conference signaling, maintain resources on the MSs 201, and allocate resources for a call. When the audio and video conference is created, the UE 204 is adapted to call in the SIP AS 203 through the gateway 205, and the SIP AS 203 makes calls the MS 201 to create the audio and video conference. Definitely, the SIP AS 203 may also initiate a conference.

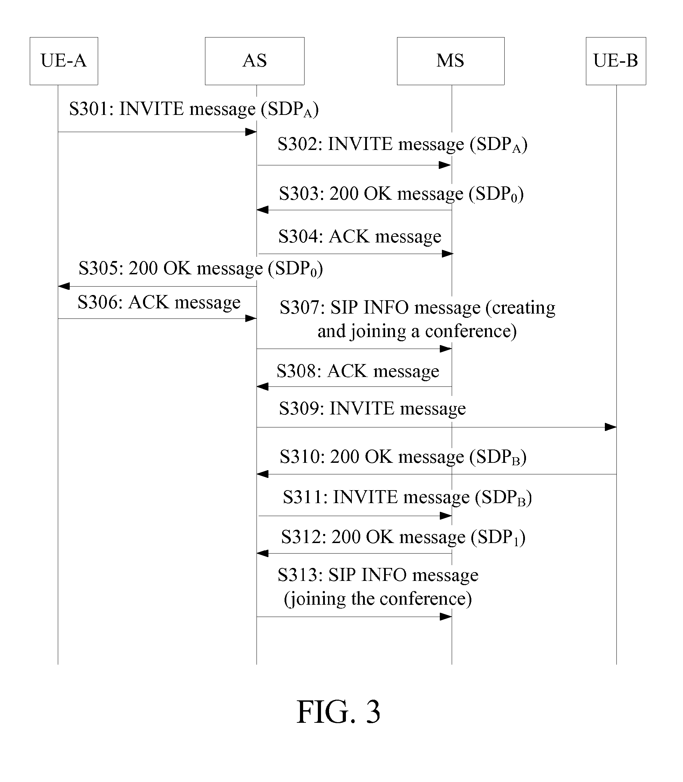

A method for creating an audio and video conference in the system shown in FIG. 2 is illustrated by taking an audio and video conference initiated by the UE 204 for example. FIG. 3 is a flow chart of a method for creating an audio and video conference according to an embodiment of the present invention. The method includes the following steps.

In S301, UE-A acting as an initiator of the conference sends an INVITE (SIP call initiation request) message through a gateway to the SIP AS. The INVITE message carries SDP_{A} information of the UE-A. The SDP_{A} information contains an IP address, a port number, and a type of processed media for receiving audio/video data packets.

In S302, the SIP AS receives the INVITE message, and sends the INVITE message carrying the SDP_{A} information of the UE-A to the MS, so as to request the MS to create a conference port for the UE-A.

In S303, the MS receives the INVITE message, allocates conference resources such as an IP port for exchanging audio/video data packets with the UE-A, and returns a 200 OK message to the SIP AS. The 200 OK message carries SDP₀ information about the conference resources allocated to the UE-A. The SDP₀ information contains an IP address, a port number, and a type of processed media for the MS to receive and send the audio/video data packets to the UE-A.

In S304, the SIP AS returns an acknowledgement (ACK) message to the MS.

In S305, the SIP AS sends a 200 OK message to the UE-A. The 200 OK message carries the SDP₀ information of the conference resources allocated by the MS to the UE-A. The SDP₀ information contains an IP address, a port number, and a type of processed media for the MS to receive and send the audio/video data packets to the SIP AS.

In S306, the UE-A returns an ACK message to the SIP AS.

In S307, the SIP AS receives the ACK message from the UE-A, and sends an SIP INFO (SIP media processing control language) message for creating and joining a conference to the MS, so as to instruct the MS to create an audio and video conference and add the UE-A into the conference afterwards.

In S308, the MS creates the audio and video conference, adds the UE-A into the conference, and returns a response to the SIP AS, for example, returns an ACK message.

In S309, the SIP AS receives the ACK message from the MS, and sends an INVITE message to UE-B.

In S310, the UE-B is off hook, and returns a 200 OK message carrying SDP_{B} information of the UE-B to the SIP AS. The SDP_{B} information contains an IP address, a port number, and a type of processed media for the UE-B to receive the audio data packets.

In S311, the SIP AS receives the 200 OK message, and sends the INVITE message carrying the SDP_{B} information of the UE-B to the MS, so as to request the MS to create a conference port for the UE-B.

In S312, the MS receives the INVITE message, allocates conference resources such as an IP port for exchanging audio/video data packets with the UE-B, and returns a 200 OK message to the SIP AS. The 200 OK message carries SDP₁ information of the conference resources allocated to the UE-B. The SDP₁ information contains an IP address, a port number, and a type of processed media for the MS to receive and send the audio/video data packets to the UE-B.

In S313, the SIP AS sends an SIP INFO message for joining a conference to the MS, so as to instruct the MS to add the UE-B into the audio and video conference created in S307. Thereby, the UE-B is added into the conference.

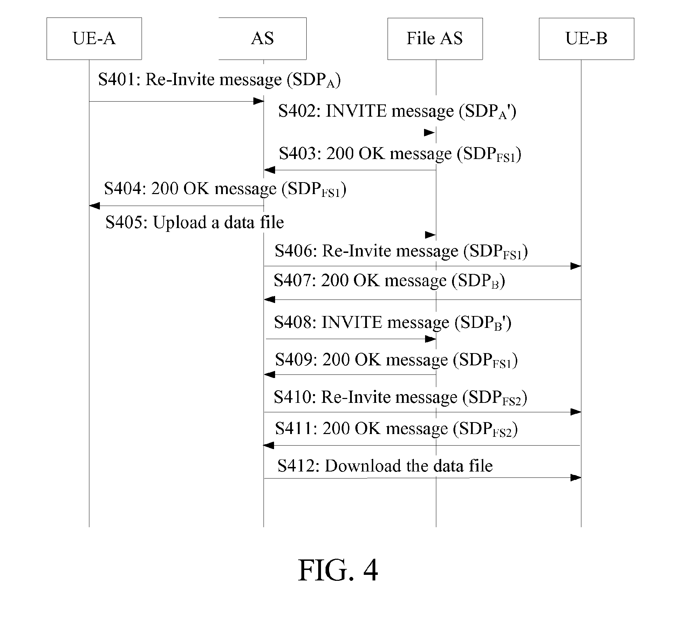

After the UE creates the audio and video conference according to the method in FIG. 3, if the UE in the audio and video conference requires file sharing, a file sharing data conference may be created through the following method. FIG. 4 is a flow chart of a method for implementing file sharing in an audio and video conference according to an embodiment of the present invention. The method includes the following steps.

In S401, UE-A acting as a data file sharing initiator sends a message for requesting to create a file sharing data conference to the SIP AS. The message for requesting to create the file sharing data conference may be a Re-Invite message (which is taken as an example for illustration in the accompanying drawings). In this embodiment, the Re-Invite message carries SDP_{A} information of the UE-A. The SDP_{A} information contains an IP address and a port number (for example, m=Fileshare port) for uploading a data file.

In S402, the SIP AS receives the Re-Invite message, generates a globally unique data conference number (ConfID) and a port occupied by data and file sharing, in which the port occupied by data and file sharing may be numbered from 0 to 65535, and carries the generated data conference number and information about the port occupied by data and file sharing in the SDP_{A} information to obtain new SDP_{A}' information.

The SIP AS sends the INVITE message carrying the SDP_{A}' information to the file AS. The SDP_{A}' information may not include audio/video (m=video and m=audio) SDP information. In the INVITE message, the ConfID is filled in a To field, and the content of a From field is identical to that of the From field when the UE-A calls in.

In S403, the file AS acquires the ConfID from the INVITE message. If the conference having the ConfID does not exist, the file AS creates a data conference named by ConfID, and establishes a conference list of the data conference. After the conference list is successfully established, the file AS adds the UE-A into the conference list, so that the UE-A joins the conference. The file AS also distributes a monitoring port for receiving the data file to the data conference. In addition, the file AS acquires and stores the port number for the UE-A to upload the data file from the INVITE message.

Then, the file AS returns a 200 OK message to the SIP AS. The 200 OK message carries SDP_{FS1} information of conference resources allocated to the data conference. The SDP_{FS1} information contains a port number (m = Fileshare port) of the monitoring port.

In S404, the SIP AS sends the 200 OK message to the UE-A.

In S405, the UE-A receives the 200 OK message, acquires the port number of the monitoring port on the file AS from the message, and uploads the data file to be shared through the monitoring port to the file AS. A transmission packet of the data file sent by the UE-A is in the following format as shown in Table 1:

**Table 1**

| Operation Type | Transmitting Direction | IP Address | Port | Id | Total | Seq | Len |
|---|---|---|---|---|---|---|---|
| Actual content and data in the data file packet | | | | | | | |

In Table 1, the Operation Type defines a type of the data conference, for example, file sharing or other types; the Transmitting Direction defines whether the data packets are transmitted from the file AS to the UE or from the UE to the file AS; the IP address denotes the actual IP address of the UE, for example, an IPV6 or IPV4 address; the Port denotes a port used by the UE to transmit the data file; the Id denotes a batch number of the data packets of the data file to be shared; the Total denotes a total number of the data packets of the data file to be transmitted in this batch; the Seq denotes a serial number of the currently transmitted data packet; the Len denotes a data length of the data packet; and the last field denotes actual file data segments carried in the packet.

In S406, the SIP AS sends a Re-Invite message to the UE requiring for sharing the data file (referred to as "UE-B" below). The Re-Invite message carries the SDP_{FS1} information of the conference resources allocated by the file AS to the data conference. The SDP_{FS1} information contains a port number of the monitoring port for downloading the data file. In this embodiment, the port number of the monitoring port for downloading the data file may be the same as the port number of the monitoring port for uploading the data file.

The SIP AS may determine rights of members to share the data file in the audio and video conference, so that the SIP AS can not only send a Re-Invite message to the UE-B, but also send the Re-Invite message to other UEs allowed to share the data file according to the preset rights. The other UEs may also act in the same manner as the UE-B, and the details will not be described herein again.

In S407, the UE-B returns a 200 OK message to the SIP AS. The 200 OK message carries SDPB information of the UE-B. The SDP_{B} information contains an IP address and a port number for receiving the data file.

In S408, the SIP AS receives the 200 OK message, and carries the data conference number and the information about the port occupied by file sharing generated in S402 in the SDP_{B} information to obtain new SDP_{B}' information.

The SIP AS sends the INVITE message carrying the SDP_{B}' information to the file AS. The SDP_{B}' information may not include audio/video (m=video and m=audio) SDP information. In the INVITE message, the ConfID is filled in a To field, and the content of a From field is identical to that of the From field when the UE-B calls in.

In S409, the file AS acquires the ConfID from the INVITE message. As the conference having the ConfID already exists, the file AS directly adds the UE-B into the conference list, so that the UE-B joins the conference.

Then, the file AS returns a 200 OK message to the SIP AS. The 200 OK message carries the SDP_{FS1} information of the conference resources allocated to the data conference. The SDP_{FS1} information contains the port number (m = Fileshare port) of the monitoring port.

In S410, the SIP AS sends a Re-Invite message to the UE-B. The Re-Invite message carries SDP_{FS2} information. The SDP_{FS2} information includes the currently used SDP information of the audio and video conference and the SDP_{FS1} information of the monitoring port for downloading the data file. Meanwhile, the SDP_{FS2} information may not include audio/video (m=video and m=audio) SDP information.

In S411, the UE-B receives the Re-Invite message from the SIP AS, and sends a 200 OK message to the SIP AS. The 200 OK message carries the SDP_{FS2} information.

In S412, the UE-B downloads the shared data file from the file AS through the monitoring port for downloading the data file.

When the UE is connected to the file AS through the Transport Control Protocol (TCP) and is ready to download a data file, before delivering the data file to the UE-B, the file AS determines whether the IP address and the port for transmitting the data file between the UE-B and the file AS match with the information in the conference list, and if yes, the shared data file is sent to the UE-B. In this manner, information leakage caused by incorrect transmission of data is avoided, thereby enhancing the security of data information sharing.

Moreover, in the above embodiment, if the initiator of the data conference intends to terminate the file sharing, the UE sends a Re-Invite message through the SIP AS to the file AS. The Re-Invite message carries the SDP_{A} information of the UE-A. The SDP_{A} information contains the port number for uploading a data file (for example, m=Fileshare port), and the port number is 0. After receiving the Re-Invite message, the file AS ends the transmission of the data file for the data conference according to the conference number of the data conference corresponding to the UE, closes all the ports distributed to the data conference, and deletes the shared data file.

Additionally, in the above embodiment, if a member of the data conference intends to exit the conference, the member UE sends a BYE (exit) message through the SIP AS to the file AS. After receiving the BYE message, the file AS closes the port distributed to the UE in the data conference according to the conference number of the data conference corresponding to the UE, and meanwhile deletes the UE from the data conference list. Alternatively, if the SIP AS at the network side initiatively disconnects the data transmission with the UE, the SIP AS directly sends a BYE (exit) message to the file AS, so as to request the file AS to delete the UE from the data conference.

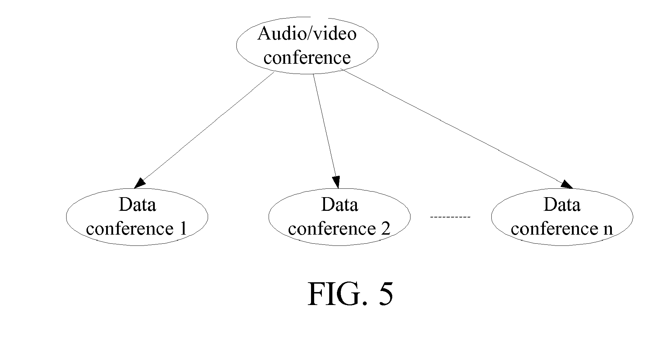

It should be noted that, in the embodiment of the present invention, the data conference is based on the audio and video conference. Referring to FIG. 5, the audio and video conference is a basic conference, one audio and video conference may include several data conferences (for example, data conferences 1 to n in FIG. 5), and each data conference is held by members predetermined by the SIP AS. The basic audio and video conference and member lists of the data conferences therein are maintained on the SIP AS, and the member lists of the data conferences are also maintained on the file AS by taking the data conference as a unit. When a member exits from the basic audio and video conference, the member needs to exit from all the data conferences that the member participates; however, if the member merely exits from the data conferences, the member may still stay in the audio and video conference without affecting the basic audio and video conference.

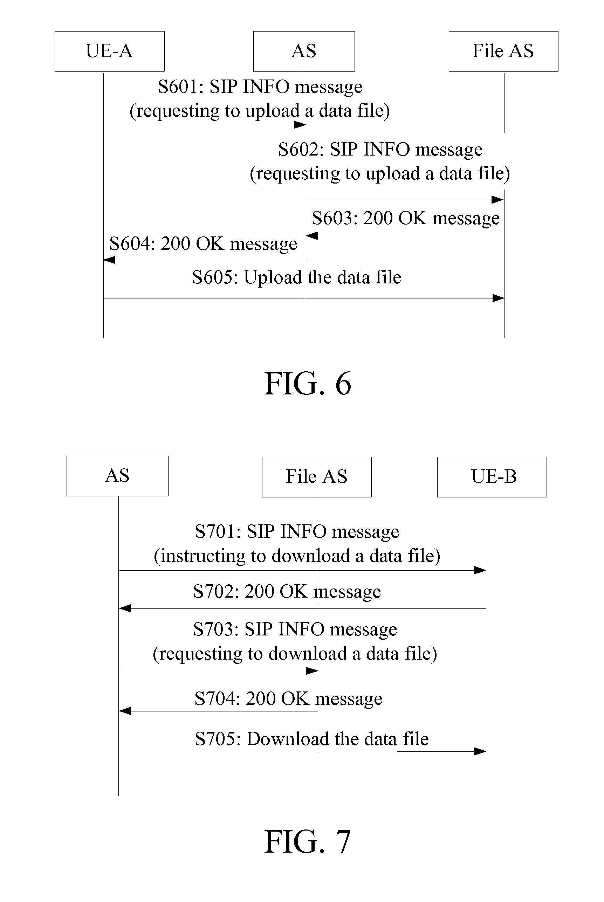

In addition, in S405 of the embodiment in FIG. 4, before uploading the data file, the UE-A may also exchange information with the file AS through an extended SIP INFO message, so as to acquire a file uploading state, thereby achieving synchronization of file uploading. FIG. 6 is a flow chart of a data file uploading method according to an embodiment of the present invention. The method includes the following steps.

In S601, the UE-A acquires the port number of the monitoring port on the file AS from the 200 OK message, and sends an SIP INFO message to the SIP AS for requesting to upload a data file. The message body of an upload request action and a file name included in the SIP INFO message for requesting to upload the data file is defined in an XML format.

In S602, the SIP AS sends the SIP INFO message for requesting to upload the data file to the file AS, so as to acquire a file uploading state.

In S603, if the file AS is ready, the file AS sends a 200 OK message to the SIP AS, so as to notify the SIP AS of the state of the file AS. The upload and ready message body included in the 200 OK message is defined in the XML format.

In S604, the SIP AS sends the 200 OK message to the UE-A.

In S605, the UE-A receives the 200 OK message, and sends the data file to the file AS.

After the data file is uploaded, the file AS sends an SIP INFO message indicating that the data file is received to the UE-A through the SIP AS, so as to notify the UE-A that the uploaded data file is completely received.

In the above embodiment, before uploading the data file, the UE-A inquires whether the file AS is ready by using an extended SIP INFO message, and after the file AS is ready, the UE-A uploads the data file, so as to ensure the synchronization between the data reception of the file AS and the data transmission of the UE-A, thereby avoiding loss in data transmission and ensuring the integrity of the data file.

Moreover, in S412 of the embodiment in FIG. 4, before downloading the data file, the UE-B may also exchange information with the file AS through an extended SIP INFO message, so as to acquire a file downloading state, thereby achieving synchronization of file downloading. FIG. 7 is a flow chart of a data file downloading method according to an embodiment of the present invention. The method includes the following steps.

In S701, the SIP AS sends an SIP INFO message to the UE-B for instructing to download a data file. The SIP INFO message for instructing to download the data file includes a file name of the data file to be downloaded.

In S702, if the UE-B is ready, the UE-B sends a 200 OK message to the SIP AS, so as to notify the SIP AS that the UE-B is ready for downloading.

In S703, the SIP AS receives the 200 OK message, and sends an SIP INFO message to the file AS for requesting the UE to download the data file.

In S704, if the file AS is ready, the file AS sends a 200 OK message to the SIP AS.

In S705, the file AS sends the data file to the UE-B.

After receiving the data file, the UE-B may also send an SIP INFO message indicating that the data file is received to the file AS through the SIP AS, so as to notify the file AS that the downloaded data file is received completely. In this manner, the file AS automatically releases the resources such as the monitoring port allocated to the data conference, and re-initiates a file sharing conference when file sharing is required the next time. Therefore, the file AS can fully utilize the resources even if the resources are limited.

After all the UEs receive the data file, the SIP AS may also send an SIP INFO message indicating that the data file sharing is completed to the data file sharing initiator UE-A, so as to notify the UE-A that all the UEs requiring file sharing have received the data file. The UE-A may also return a 200 OK message to the SIP AS, so as to end the data file sharing process.

Moreover, in S405 of the embodiment in FIG. 4, when an abnormality occurs to the UE-A in the data file uploading process, the UE-A sends a data file sharing end message to the SIP AS. The message may be a Re-Invite message. The Re-Invite message includes a port number for uploading the data file (for example, m=Fileshare port), and the port number is 0.

In addition, in S411 of the embodiment in FIG. 4, when an abnormality occurs to the UE-B in the data file downloading process, the UE-B sends an SIP INFO message indicating a data file downloading error to the SIP AS. Meanwhile, the UE-B also sends an SIP INFO message for terminating the data file downloading process to the file AS.

It should be noted that, in the embodiment of the present invention, the audio and video conference and data conference signaling is uniformly borne in the SIP session, but the audio/video and file data streams are transmitted and received separately with no association. Thereby, the UE needs to be respectively adapted to the audio and video conference and the file sharing data processing when receiving or transmitting audio, video, and file sharing data at the same time. That is, when receiving audio/video data, the UE implements sound and image processing, display, and other processing in the audio and video conference; and when receiving a data file, the UE implements data processing of the data file according to the type of the file based on service requirements.

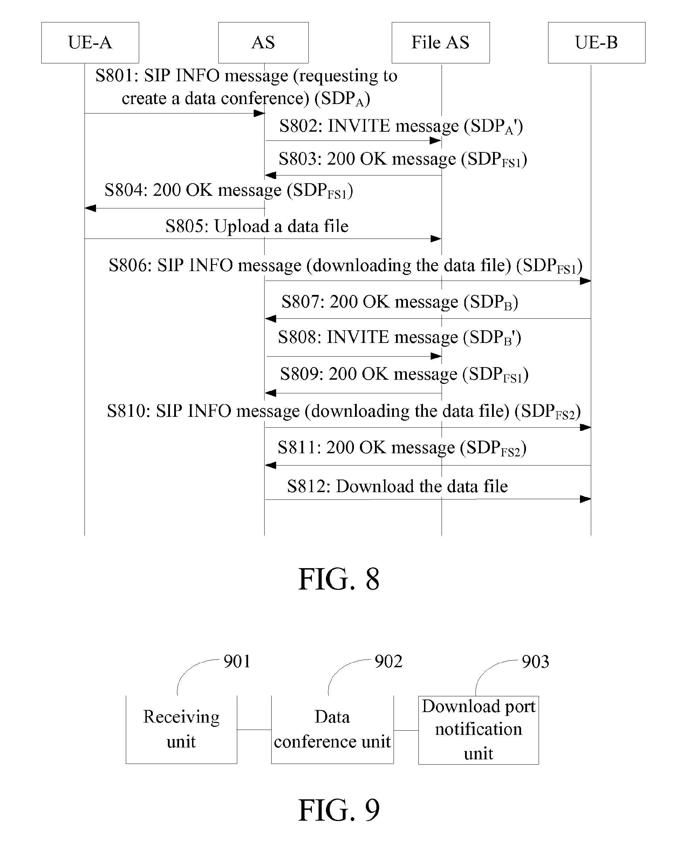

Further, in the audio and video conference, the message for requesting to create a file sharing data conference in the embodiment of the method for implementing file sharing may be a Re-Invite message or an SIP INFO message. FIG. 8 is a flow chart of another method for implementing file sharing based on an audio and video conference according to an embodiment of the present invention. This embodiment is also illustrated below by taking file sharing initiated by a UE for example. The method includes the following steps.

In S801, UE-A acting as a file sharing initiator sends a message to the SIP AS for requesting to create a file sharing data conference. The message for requesting to create the file sharing data conference may be an SIP INFO message for requesting to create a data conference. The SIP INFO message carries SDP_{A} information of the UE-A. The SDP_{A} information contains an IP address and a port number (for example, m=Fileshare port) for uploading a data file. The SDP_{A} information may be defined in an XML document.

In S802, the SIP AS receives the SIP INFO message requesting the data conference, generates a globally unique data conference number (ConfID) and a port occupied by file sharing, in which the port occupied by file sharing may be numbered from 0 to 65535, and carries the generated data conference number and information about the port occupied by file sharing in the SDP_{A} information to obtain new SDP_{A}' information.

The SIP AS sends an INVITE message carrying the SDP_{A}' information to the file AS. The SDP_{A}' information may not include audio/video (m=video and m=audio) SDP information. In the INVITE message, the ConfID is filled in a To field, and the content of a From field is identical to that of the From field when the UE-A calls in.

In S803, the file AS acquires the ConfID from the INVITE message. If the conference having the ConfID does not exist, the file AS creates a data conference named by ConfID, and establishes a conference list of the data conference. After the conference list is successfully established, the file AS adds the UE-A into the conference list, so that the UE-A joins the conference. The file AS also distributes a monitoring port for receiving the data file to the data conference. In addition, the file AS acquires and stores the port number for the UE-A to upload the data file from the INVITE message.

Then, the file AS returns a 200 OK message to the SIP AS. The 200 OK message carries SDP_{FS1} information of conference resources allocated to the data conference. The SDP_{FS1} information contains a port number (m = Fileshare port) of the monitoring port.

In S804, the SIP AS sends the 200 OK message to the UE-A.

In S805, the UE-A receives the 200 OK message, acquires the port number of the monitoring port on the file AS from the message, and uploads the data file to be shared to the file AS through the monitoring port. A transmission packet of the data file sent by the UE-A is in the following format as shown in Table 1.

In S806, the SIP AS sends an SIP INFO message for downloading a data file to the UE requiring for sharing the data file (referred to as "UE-B" below). The SIP INFO message carries the SDP_{FS1} information of the conference resources allocated by the file AS to the data conference. The SDP_{FS1} information contains a port number of the monitoring port for downloading the data file. In this embodiment, the port number of the monitoring port for downloading the data file may be the same as the port number of the monitoring port for uploading the data file.

The SIP AS may determine rights of members to share the data file in the audio and video conference, so that the SIP AS can not only send an SIP INFO message for downloading the data file to the UE-B, but also send the SIP INFO message for downloading the data file to other UEs allowed to share the data file according to preset rights. The other UEs may also act in the same manner as the UE-B, and the details will not be described herein again.

In S807, the UE-B returns a 200 OK message to the SIP AS. The 200 OK message carries SDP_{B} information of the UE-B. The SDP_{B} information contains an IP address and a port number for receiving the data file.

In S808, the SIP AS receives the 200 OK message, and carries the data conference number and the information about the port occupied by file sharing generated in S802 in the SDP_{B} information to obtain new SDP_{B}' information.

The SIP AS sends the INVITE message carrying the SDP_{B}' information to the file AS. The SDP_{B}' information may not include audio/video (m=video and m=audio) SDP information. In the INVITE message, the ConfID is filled in a To field, and the content of a From field is identical to that of the From field when the UE-B calls in.

In S809, the file AS acquires the ConfID from the INVITE message. As the conference having the ConfID already exists, the file AS directly adds the UE-B into the conference list, so that the UE-B joins the conference.

Then, the file AS returns a 200 OK message to the SIP AS. The 200 OK message carries the SDP_{FS1} information of the conference resources allocated to the data conference. The SDP_{FS1} information contains the port number (m = Fileshare port) of the monitoring port.

In S810, the SIP AS sends an SIP INFO message for downloading the data file to the UE-B. The SIP INFO message carries SDP_{FS2} information. The SDP_{FS2} information includes the currently used SDP information of the audio and video conference and the SDP_{FS1} information of the monitoring port for downloading the data file. Meanwhile, the SDP_{FS2} information may not include the audio/video (m=video and m=audio) SDP information.

In S811, the UE-B receives the SIP INFO message for downloading the data file from the SIP AS, and sends a 200 OK message to the SIP AS. The 200 OK message carries the SDP_{FS2} information.

In S812, the UE-B downloads the shared data file from the file AS through the monitoring port for downloading the data file.

In the above embodiment, the SIP signaling for creating an audio and video conference is extended to implement file sharing in the audio and video conference, such that graphics, data, vote, and other applications can be transmitted in the audio and video conference by the members of the conference through file sharing, so as to enable users to acquire more types of text and graphics information in a multimedia audio and video conference, which facilitates the development of various types of services and enriches users' demands for communication. In the embodiment of the present invention, the SIP signaling is extended based on the existing architecture, which protects the original investment, reduces the required cost, and is easy to implement.

In an embodiment, the present invention further provides a network entity. The network entity may be an AS, which is capable of implementing file sharing based on an audio and video conference. Referring to FIG. 9, the network entity includes a receiving unit 901 and a data conference unit 902.

The receiving unit 901 is adapted to receive a message sent by a file sharing initiator in an audio and video conference for requesting to create a file sharing data conference. The message carries SDP information about an IP address and a port number for the initiator to upload a data file.

The data conference unit 902 is adapted to generate a data conference number and a port occupied by file sharing for the initiator when the receiving unit 901 receives the message for requesting to create the file sharing data conference, such that a file AS is enabled to create the data conference of the data conference number according to the generated data conference number, add the initiator into the data conference, package a monitoring port distributed to the data conference in the SDP information, carry the SDP information in a response message, and send the message to the initiator, so as to enable the initiator to upload the data file according to the SDP information of the monitoring port.

Moreover, the AS in the above embodiment of the network entity may further include a download port notification unit 903, adapted to send a Re-Invite message to a receiving UE that requires for sharing the data file. The Re-Invite message carries a port number of the monitoring port distributed by the file AS for downloading the data file. Thereby, the receiving UE receives the Re-Invite message, and returns a response to the file AS. The file AS adds the receiving UE into the data conference according to an IP address and port number information for receiving the data file carried in the response, so as to enable the receiving UE to download the data file.

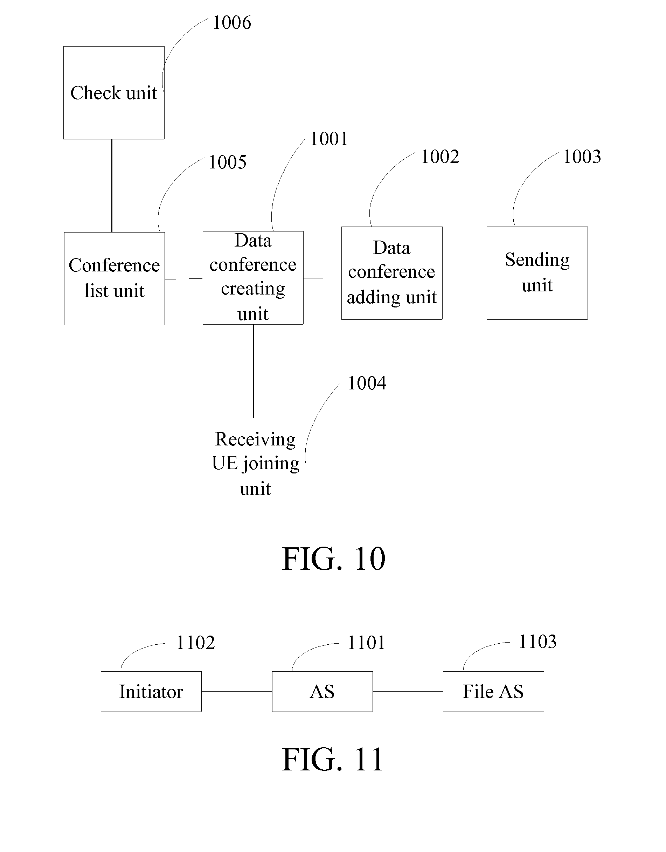

In an embodiment, the present invention further provides a network entity. The network entity may be a file AS, which is capable of implementing file sharing in an audio and video conference. FIG. 10 is a schematic view of a structure of another network entity according to an embodiment of the present invention. Referring to FIG. 10, the file AS includes a data conference creating unit 1001, a data conference adding unit 1002, and a sending unit 1003.

The data conference creating unit 1001 is adapted to create a data conference of a data conference number after an AS generates the data conference number and a port occupied by file sharing according to a received message for requesting to create the file sharing data conference sent by a file sharing initiator in an audio and video conference.

The data conference adding unit 1002 is adapted to add the initiator into the data conference created by the data conference creating unit 1001, and distribute a monitoring port to the data conference.

The sending unit 1003 is adapted to package the monitoring port distributed by the data conference adding unit 1002 to the data conference in the SDP information, carry the SDP information in a response message, and send the message to the initiator, so as to enable the initiator to upload the data file according to the SDP information of the monitoring port.

Moreover, based on the embodiment of the device in FIG. 10, the file AS may further include a receiving UE joining unit 1004.

The receiving UE joining unit 1004 is adapted to add a receiving UE into the data conference created by the data conference creating unit 1001 according to an IP address and port number information for receiving a data file carried in a response returned by the receiving UE, so as to enable the receiving UE to download the data file.

The present invention further provides a schematic block diagram of a structure of a network entity. Based on the embodiment of the network entity shown in FIG. 10, in this embodiment, the message for requesting to create the file sharing data conference carries SDP information about an IP address and the port number for the initiator to upload a data file. The file AS also includes a conference list unit 1005.

The conference list unit 1005 is adapted to establish a conference list of the data conference when the data conference creating unit 1001 creates the data conference for the initiator, and add the SDP information about the IP address and the port number for the initiator to upload the data file into the conference list.

In addition, the conference list unit 1005 may also add an IP address and port number information for the receiving UE to download a data file into the conference list.

The file AS also includes a check unit 1006, adapted to determine whether an IP address and a port for transmitting a data file between the receiving UE and a network entity match with the information in the conference list before the receiving UE downloads the data file, and if yes, to download the data file.

Based on the above technical solutions, in an embodiment, the present invention further provides a system for implementing file sharing in an audio and video conference. Referring to FIG. 11, the system includes an AS 1101 and a file AS 1103.

The AS 1101 is adapted to receive a message sent by a file sharing initiator 1102 in the audio and video conference for requesting to create a file sharing data conference, generate a data conference number and a port occupied by file sharing, and notify the file AS 1103 of the data conference number and the port occupied by file sharing, so as to enable the file AS 1103 to create the data conference of the data conference number.

The file AS 1103 is adapted to create the data conference of the data conference number according to the data conference number generated by the AS 1101, add the initiator 1102 into the data conference, package a monitoring port distributed to the data conference in SDP information, carry the SDP information in a response message, and send the message to the initiator 1102, so as to enable the initiator 1102 to upload the data file according to the SDP information of the monitoring port.

The above device embodiments are merely exemplary. Units described as separate components may be or may not be physically separated. Components shown as units may be or may not be physical units, that is, may be located at one place or distributed to a plurality of network units. Some or all of the modules may be selected to achieve the objective of the solution of the embodiment according to actual demands. Persons of ordinary skill in the art may understand and implement the present invention without creative activities.

Through the above description of the embodiments, it is apparent to persons skilled in the art that the present invention may be accomplished by software on a necessary universal hardware platform, and definitely may also be accomplished by hardware, in which the former is generally much preferred. Therefore, the above technical solution or the part that makes contributions to the conventional technology can be substantially embodied in the form of a software product. The computer software product may be stored in a storage medium such as a ROM/RAM, a magnetic disk, or an optical disk, and contain several instructions to instruct a computer equipment (for example, a personal computer, a server, or a network equipment) to perform the method as described in the embodiments of the present invention or in some parts of the embodiments.

The above embodiments are not intended to limit the scope of the present invention. Any modification, equivalent replacement, and improvement made without departing from the spirit and principle of the invention fall within the protection scope of the present invention.

## Claims

1. A method for implementing file sharing in an audio and video conference, **characterized by** comprising:
receiving a message sent by a file sharing initiator in the audio and video conference for requesting to create a file sharing data conference;
creating the data conference for the initiator, and adding the initiator into the data conference; and
carrying Session Description Protocol, SDP, information of a monitoring port distributed to the data conference in a response message, and sending the message to the initiator.

2. The method according to claim 1, wherein
the receiving the message sent by the file sharing initiator in the audio and video conference for requesting to create the file sharing data conference comprises:
receiving, by an application server, AS, the message sent by the file sharing initiator in the audio and video conference for requesting to create the file sharing data conference; and
the creating the data conference for the initiator comprises:
generating a data conference number and a port occupied by file sharing, and notifying a file AS of the data conference number and the port occupied by file sharing; and
creating, by the file AS, a data conference of the data conference number.

3. The method according to claim 1 or 2, further comprising:
notifying a receiving user equipment, UE, of a port number of the monitoring port distributed for downloading a data file;
adding the receiving UE into the data conference according to an Internet Protocol (IP) address and port number information for receiving the data file carried in a response returned by the receiving UE; and
downloading, by the receiving UE, the data file through the monitoring port.

4. The method according to claim 3, wherein
the notifying the receiving UE of the port number of the monitoring port distributed for downloading the data file comprises:
sending, by the AS, a Re-Invite message to the receiving UE requiring for sharing the data file, wherein the Re-Invite message carries the port number of the monitoring port distributed by the file AS for downloading the data file; and
the adding the receiving UE into the data conference according to the IP address and the port number information for receiving the data file carried in the response returned by the receiving UE comprises:
adding, by the file AS, the receiving UE into the data conference according to the IP address and the port number information for receiving the data file carried in the response returned by the receiving UE.

5. The method according to claim 3, wherein the message for requesting to create the file sharing data conference carries SDP information about an IP address and a port number for the initiator to upload a data file;
the method further comprises:
when creating the data conference for the initiator, establishing a conference list of the data conference, and adding the SDP information about the IP address and the port number for the initiator to upload the data file into the conference list; and
the adding the receiving UE into the data conference further comprises: adding the IP address and the port number information for the receiving UE to receive the data file into the conference list.

6. The method according to claim 5, wherein before the receiving UE downloads the data file, the method further comprises:
determining whether the IP address and the port for transmitting the data file between the receiving UE and the file AS match with the information in the conference list, and if yes, downloading the data file.

7. The method according to claim 1, further comprising:
receiving the data file uploaded by the initiator according to the SDP information of the monitoring port;
during the receiving of the uploaded data file, if the initiator terminates the file sharing, receiving a Re-Invite message sent by the initiator, wherein the Re-Invite message carries information about a port number of 0 for the initiator to upload the data file; and
ending the receiving of the data file uploaded by the initiator, closing all the ports distributed to the data conference, and deleting the uploaded data file.

8. An application server, AS, **characterized by** comprising:
a receiving unit, adapted to receive a message sent by a file sharing initiator in an audio and video conference for requesting to create a file sharing data conference, wherein the message carries Session Description Protocol, SDP, information about an Internet Protocol, IP, address and a port number for the initiator to upload a data file; and
a data conference unit, adapted to generate a data conference number and a port occupied by file sharing for the initiator when the receiving unit receives the message for requesting to create the file sharing data conference, add the initiator into the data conference, package a monitoring port distributed to the data conference in the SDP information, carry the SDP information in a response message, and send the message to the initiator.

9. The AS according to claim 8, further comprising:
a download port notification unit, adapted to send a Re-Invite message to a receiving user equipment, UE, requiring for sharing the data file, wherein the Re-Invite message carries a port number of the monitoring port distributed by a file AS for downloading the data file.

10. A file application server, AS, **characterized by** comprising:
a data conference creating unit, adapted to receive a data conference number and a port occupied by file sharing generated by an AS when creating a data conference for an initiator, and create a data conference of the data conference number;
a data conference adding unit, adapted to add the initiator into the data conference created by the data conference creating unit, and distribute a monitoring port to the data conference; and
a sending unit, adapted to package the monitoring port distributed by the data conference adding unit to the data conference in the SDP information, carry the SDP information in a response message, and send the message to the initiator.

11. The file AS according to claim 10, further comprising:
a receiving user equipment, UE, joining unit, adapted to add a receiving UE into the data conference created by the data conference creating unit according to an Internet Protocol, IP, address and port number information for receiving a data file carried in a response returned by the receiving UE.

12. The file AS according to claim 10 or 11, wherein a message for requesting to create a file sharing data conference carries SDP information about an IP address and the port number for the initiator to upload a data file, the file AS further comprising:
a conference list unit, adapted to establish a conference list of the data conference when the data conference creating unit creates the data conference for the initiator, and add the SDP information about the IP address and the port number for the initiator to upload the data file into the conference list.

13. The file AS according to claim 12, wherein the conference list further comprises an IP address and port number information for the receiving UE to download a data file, the file AS further comprising:
a check unit, adapted to determine whether an IP address and a port for transmitting a data file between the receiving UE and a network entity match with the information in the conference list before the receiving UE downloads the data file, and if yes, download the data file.

14. A system for implementing file sharing in an audio and video conference, **characterized by** comprising:
an application server, AS, adapted to receive a message sent by a file sharing initiator in the audio and video conference for requesting to create a file sharing data conference, and generate a data conference number and a port occupied by file sharing; and
a file AS, adapted to create a data conference of the data conference number according to the data conference number generated by the AS, add the initiator into the data conference, package a monitoring port distributed to the data conference in Session Description Protocol, SDP, information, carry the SDP information in a response message, and send the message to the initiator.

15. The system according to claim 14, wherein the file AS is further adapted to add a receiving user equipment, UE, into the data conference created by a data conference creating unit according to an Internet Protocol, IP, address and port number information for receiving a data file carried in a response returned by the receiving UE.
